# EUROPÄISCHE PATENTSCHRIFT

(11) **EP 0 558 098 B1**
(45) Veröffentlichungstag und Bekanntmachung des Hinweises auf die Patenterteilung: **15.07.1998**
(21) Anmeldenummer: 93107024.7
(22) Anmeldetag: 15.10.1990
(51) Int. Cl.: B41C 1/14, B41C 1/055

(54) **Vorrichtung zum Bearbeiten von Hohlzylindern mittels eines Lasers**
Apparatus for processing a hollow cylinder with a laser
Appareil pour le traitement d'un cylindre creux avec un laser

(30) Priorität: 07.11.1989 AT 2561/89
(43) Veröffentlichungstag der Anmeldung: 01.09.1993
(62) Teilanmeldung aus: 90119699.8
(73) Patentinhaber: Schablonentechnik Kufstein Aktiengesellschaft, 6330 Kufstein (AT)
(72) Erfinder: Suchan, Erwin, A-6335 Thiersee 385 (AT)
(74) Vertreter: TER MEER STEINMEISTER & PARTNER GbR

(56) Entgegenhaltungen:
- EP-A- 0 320 137
- FR-A- 2 417 033
- FR-A- 2 486 262
- US-A- 2 338 877
- US-A- 4 023 967

## Beschreibung

Die Erfindung betrifft eine Vorrichtung gemäß dem Oberbegriff des Patentanspruchs 1 zum Bearbeiten von Hohlzylindern mittels eines Lasers, insbesondere zur Herstellung einer Rundschablone.

Aus der EP-A-0 320 137 ist bereits eine Vorrichtung zum Bearbeiten von Hohlzylindern mittels eines Lasers bekannt, insbesondere zur Herstellung einer Rundschablone, wobei eine Lagerung für den Hohlzylinder, zum Hohlzylinder parallele Führungen für eine Laseroptik, auf denen ein die Laseroptik tragender Schlitten beweglich geführt ist, und ein Antrieb für den Schlitten vorhanden sind. In den Hohlzylinder greifen stirnseitig Endringe ein, von denen einer in Achsrichtung des Hohlzylinders verstellbar ist. Beide Endringe sitzen auf einer gemeinsamen Welle, die im Innern des Hohlzylinders verläuft. Auf der gemeinsamen Welle zwischen den Endringen ist ein Stützring angeordnet, der zur Abstützung des Hohlzylinders dient und auf der gemeinsamen Welle in deren Längsrichtung zusammen mit dem Schlitten verschiebbar ist.

Aus der FR-A-2486262 ist eine weitere Vorrichtung bekannt, bei der ein Hohlzylinder dadurch gehalten wird, daß in seine gegenüberliegenden Stirnenden jeweils ein Stützkegel eingreift. Auch hier liegen beide Stützkegel auf einer gemeinsamen Welle, die Im Innern des Hohlzylinders verläuft, wobei zusätzlich zwischen der gemeinsamen Welle und dem Hohlzylinder noch Dämpfungsmittel vorhanden sein können. Einer der Stützkegel ist in Axialrichtung des Hohlzylinders verschiebbar angeordnet.

Eine entsprechende Vorrichtung ist aus der US-A-2 338 877 bekannt. Auch hier wird ein Hohlzylinder stirnseitig über Stützkegel gelagert, die auf einer gemeinsamen Welle angeordnet sind, welche im Innern des Hohlzylinders verläuft. Einer der Stützkegel ist wiederum in Längsrichtung des Hohlzylinders verschiebbar.

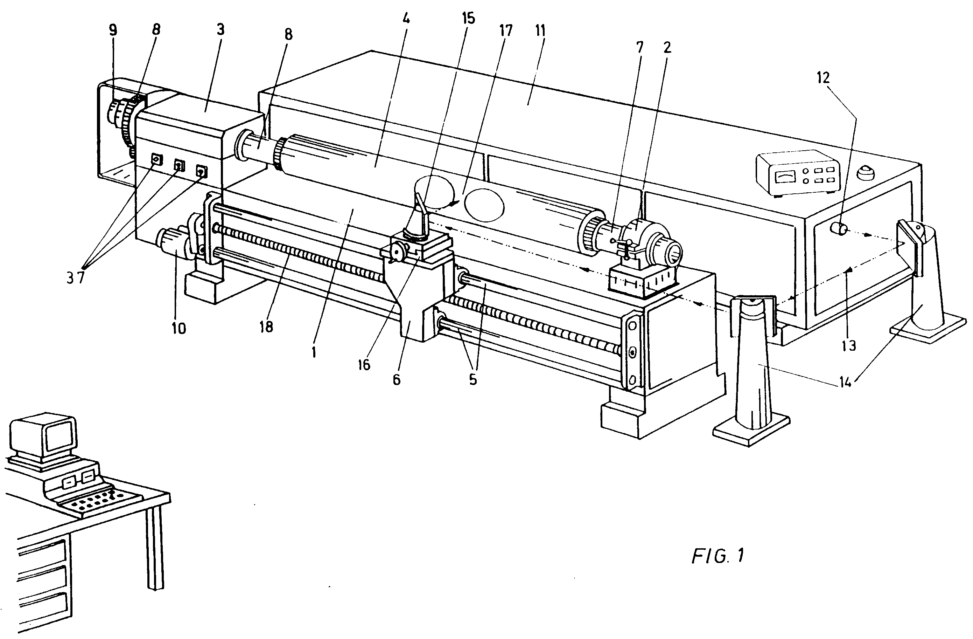

Nicht zuletzt ist es aus der DE 36 01 327 C2 bekannt, einen Siebdruck-Schablonenrohling auf einen in Umfangsrichtung expandierbaren, im gespannten Zustand genau rundlaufenden Kreiszylinder aufzuziehen. Gemäß der Figur 1 , die sich auf diesen Stand der Technik bezieht, sind auf einem verwindungs- und biegesteifen Grundkörper 1 Lager 2, 3 zum Halten des Siebdruckschablonenrohlings vorgesehen, der auch als Schablonenzylinder 4 bezeichnet werden kann. Parallel zur Achse des Schablonenzylinders 4 sind Parallelführungen 5 für einen Führungsschlitten 6 vorgesehen. Bedienschalter 37 der Vorrichtung sind nur schematisch angedeutet.

Für den Führungsschlitten 6 ist ein Vorschubantrieb 10 vorhanden, zweckmäßigerweise ein Schrittmotor, dessen Schrittwahl so zu wählen ist, daß ein schrittweises Vorrücken des Führungsschlittens 6 um jeweils 10 µm erfolgen kann. Ein derartiger Schrittmotor 10 treibt eine Schraubspindel 18 an, die mit dem Führungsschlitten 6 in Eingriff steht.

Ein Lasergerät 11 gibt am Laserstrahlausgang 12 einen Laserstrahl 13 ab, der über zwei Umlenkstationen 14 zu einem Umlenkspiegel 15 auf dem Führungsschlitten 6 geleitet wird. Zur Einstellung der Lage des Umlenkspiegels 15 zum Schablonenzylinder 4 ist eine Verstellvorrichtung 16 vorhanden. Der Umlenkspiegel 15 hat die Aufgabe, den parallel zur Achse des Schablonenzylinders 4 geführten Laserstrahl 13 in eine Richtung senkrecht zur Schablonenwandung umzulenken, so daß er auf den Gravurbereich 17 trifft.

Das auf den Schablonenzylinder 4 aufzutragende Muster wird in Steuerungsimpulse umgesetzt, was einerseits durch Abtasten einer Vorlage oder durch Einspeicherung in eine elektronische Anlage erfolgen kann. Diese Steuerungsimpulse betätigen entsprechend das Lasergerät 11 und es wird somit punktweise der Laserstrahl 13 auf den auf dem Kreiszylinder aufgespannten Schablonenzylinder 4 gerichtet. Der Laserstrahl 13 bewirkt an seiner Auftreffstelle eine Entfernung des die gelochte Folie bedeckenden Materials, so daß hier die Öffnungen im Schablonenzylinder 4 wieder freigelegt werden. Auf diese Weise kann Punkt für Punkt das gewünschte Muster auf den Schablonenzylinder 4 übertragen werden und durch gemeinsame Steuerung des Lasergeräts 11 und des Führungsschlittens 6 kann auch eine Wiederholung des aufzutragenden Musters auf den Schablonenzylinder 4 in einfacher Weise erfolgen.

Der Erfindung liegt die Aufgabe zugrunde, die Vorrichtung der eingangs genannten Art so weiterzubilden, daß ein einfacheres Einlegen des Hohlzylinders in die Vorrichtung möglich ist, ohne daß die Gefahr besteht, daß sich der Rundlauf des eingelegten Hohlzylinders verschlechtert.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Erfindungsgemäß wird vorgeschlagen, daß in die Enden des Hohlzylinders nur je ein Stützkegel eingreift, von denen einer in Achsrichtung des Hohlzylinders verstellbar ist. Da nur einer der Stützkegel in Richtung der Schablonenachse bewegt werden muß, ist es leicht, den Siebdruck-Schablonenrohling bzw. Hohlzylinder mittels eines Automaten einzulegen.

Die Erfindung wird nachfolgend anhand der Zeichnung näher beschrieben. Es zeigen:
**Figur 1** eine Gesamtansicht einer aus der DE 36 01 327 C2 bekannten Vorrichtung; und
**Figur 2** Stützkegel zur Halterung des Siebdruck-Schablonenrohlings bei der Vorrichtung nach Figur 1.

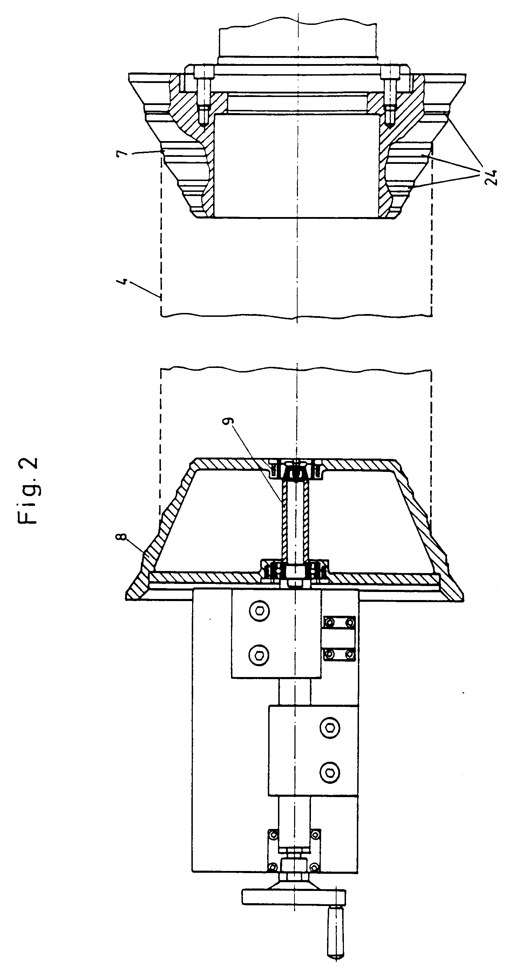

Wie Fig. 2 zeigt, sind für die beiden Enden des Schablonenzylinders 4 je ein Stützkegel 7 bzw. 8 vorgesehen. Einer der beiden Stützkegel, z.B. der Stützkegel 8, kann in Richtung der Achse des Schablonenzylinders 4 händisch oder automatisch verstellt werden. Der Stützkegel 7 bzw. 8 hat eine profilierte Fläche, wobei auf diese Profilierungen 24 der Schablonenzylinder 4 aufgesteckt wird. Ferner sind diese Stützkegel 7 und 8 jeweils um einen Stutzen 9 frei drehbar und sie können sich gemeinsam mit dem Schablonenzylinder 4 verdrehen.

## Patentansprüche

1. Vorrichtung zum Bearbeiten von Hohlzylindern mittels eines Lasers, insbesondere zur Herstellung einer Rundschablone, wobei eine Lagerung für den Hohlzylinder, zum Hohlzylinder parallele Führungen für eine Laseroptik, auf denen ein die Laseroptik tragender Schlitten beweglich geführt ist, und ein Antrieb für den Schlitten vorhanden sind, dadurch gekennzeichnet, daß in die Enden des Hohlzylinders (4) nur je ein Stützkegel (7, 8) eingreift, von denen einer in Achsrichtung des Hohlzylinders (4) verstellbar ist.

2. Vorrichtung nach Anspruch 1, dadurch gekennzeichnet, daß die Stützkegel (7, 8) eine profilierte Oberfläche aufweisen.

3. Vorrichtung nach Anspruch 2, daß die Profilierung stufenförmig ist.

4. Vorrichtung nach einem der Ansprüche 1 bis 3, die die Stützkegel (7, 8) jeweils um einen Stutzen (9) frei drehbar sind.

## Claims

1. Apparatus for processing hollow cylinders by means of a laser, in particular for producing a round stencil, there being a bearing for the hollow cylinder, guides, which are parallel to the hollow cylinder, are intended for laser optics and on which a carriage bearing the laser optics is movably guided, and a drive for the carriage, characterized in that only one supporting cone (7, 8) engages in each end of the hollow cylinder (4), and one of these cones is adjustable in the axial direction of the hollow cylinder (4).

2. Apparatus according to Claim 1, characterized in that the supporting cones (7, 8) have a profiled surface.

3. Apparatus according to Claim 2, [lacuna] that the profiling is step-like.

4. Apparatus according to Claims 1 to 3, [lacuna] that the supporting cones (7, 8) are each freely rotatable about a connecting piece (9).

## Revendications

1. Dispositif d'usinage de cylindres creux au moyen d'un laser, en particulier pour la fabrication d'un gabarit rond, dans lequel dispositif sont prévus: un montage de tourillonnement du cylindre creux, des guidages parallèles au cylindre creux pour une optique laser, sur lesquels est guidé de façon déplaçable un chariot portant l'optique laser et un entraînement pour le chariots, caractérisé en ce qu'à chacune des extrémités du cylindre creux (4), ne s'engage qu'un cône d'appui (7, 8), cônes dont l'un est réglable dans la direction axiale du cylindre creux (4).

2. Dispositif selon la revendication 1, caractérisé en ce que les cônes d'appui (7, 8) présentent une surface profilée.

3. Dispositif selon la revendication 2, caractérisé en ce que le profilage est à forme étagée.

4. Dispositif selon l'une des revendications 1 à 3, caractérisé en ce que les cônes d'appui (7, 8) sont chacun susceptibles de tourner librement autour d'un support (9).
